# EUROPEAN PATENT APPLICATION

(11) **EP 4 685 831 A1**
(43) Date of publication of application: **28.01.2026**
(21) Application number: 24774463.4
(22) Date of filing: 02.02.2024
(51) Int. Cl.: H01G 2/10

(54) **CAPACITOR AND METHOD FOR MANUFACTURING CAPACITOR**

(30) Priority: 23.03.2023 JP 2023046239
(71) Applicant: Nichicon Corporation, Kyoto-shi, Kyoto 604-0845 (JP)
(72) Inventor: MORI, Takashi, Kyoto-shi, Kyoto 604-0845 (JP); EMORI, Makoto, Kyoto-shi, Kyoto 604-0845 (JP)
(74) Representative: Global IP Europe Patentanwaltskanzlei
(86) International application number: PCT/JP2024/003410
(87) International publication number: WO 2024/195317

(57) **Abstract**

To provide a capacitor having reduced variations in the amount of a sealing resin and having an upper surface with improved height dimensional accuracy. The capacitor (1) includes: a capacitor element (10); a case (50) that has an open part (51f) and houses the capacitor element (10); a lid (60) that has a through part (61aa to 61af) and is disposed at the open part (51f) with the capacitor element (10) being housed in the case (50); and a sealing resin (70) that is poured into the case (50) to seal the capacitor element (10).

## Description

### FIELD

The present invention relates to a capacitor having a capacitor element housed in a case and enclosed with a sealing resin and a method for manufacturing the same.

### BACKGROUND

A conventional capacitor, for example, the capacitor disclosed in JP 2022-100801 A (hereinafter referred to as "Patent Literature 1"), includes a capacitor element that has a first terminal electrode and a second terminal electrode. The capacitor element is housed in a box-like case having one side open, with a first busbar being connected to the first terminal electrode and a second busbar being connected to the second terminal electrode. Thereafter, a sealing resin is poured into the empty space of the case to seal the capacitor element with the sealing resin.

The case of the capacitor disclosed in Patent Literature 1 has a bottom part, a circumferential wall part, and an index part. The bottom part is provided below housing space for housing the capacitor element. The circumferential wall part surrounds the four sides of the housing space. The index part serves as the index for a resin surface of the sealing resin. The index part has an upper-limit index part and a lower-limit index part. The upper-limit index part extends upward from the bottom part and is at a lower position than the upper end of the circumferential wall part. The lower-limit index part is at a lower position than the upper end of the upper-limit index part. The upper-limit index part and the lower-limit index part are integrated.

### BRIEF SUMMARY

### TECHNICAL PROBLEM

In some cases, it may be difficult to provide an index part to a case due to the size constraint of a capacitor. Even if it is possible to provide an index part to the case, there is still a problem: a vehicular capacitor requires a large current, which requires cooling. A heat dissipation component may be disposed on the upper surface of the capacitor (the resin surface of the sealing resin) that has a case's open part. This requires the resin surface height to be highly accurate. Even if an index part was provided to the case, the dimensional accuracy of the resin surface height of the sealing resin may not be able to meet the requirements due to the variations in the amount of the poured sealing resin. While it may be possible to pour the sealing resin several times with different resin amounts poured per unit time. However, this will increase the process time.

Another problem is that bubbles that form from the time the sealing resin is poured until it cures can accumulate at the upper part of the case. In this case, the upper surface of the sealing resin may become lower due to the accumulation of bubbles at the upper part of the case, resulting in a thinner sealing resin than intended.

An object of the present invention is to provide a capacitor having reduced variations in the amount of a sealing resin and having an upper surface with improved height dimensional accuracy.

### SOLUTION TO PROBLEM

A first aspect of the present invention provides
a capacitor including:
a capacitor element;
a case that has an open part and houses the capacitor element;
a lid that has a through part and is disposed at the open part with the capacitor element being housed in the case; and
a sealing resin that is poured into the case to seal the capacitor element.

A second aspect of the present invention provides
a manufacturing method of a capacitor, including:
disposing a lid having a through part at an open part of a case that houses a capacitor element; and
pouring a sealing resin into the case through the through part, with the lid being disposed at the open part, to seal the capacitor element.

A third aspect of the present invention provides
a manufacturing method of a capacitor, including:
pouring a sealing resin into a case that houses a capacitor element to seal the capacitor element; and
disposing a lid having a through part at an open part of the case that houses the capacitor element sealed by the sealing resin.

### ADVANTAGEOUS EFFECTS

The present invention reduces variations in the amount of a sealing resin and improves the height dimensional accuracy of the upper surface of a capacitor.

### BRIEF DESCRIPTION OF DRAWINGS

FIG. 1 is a perspective view of a capacitor according to a first embodiment.
FIG. 2 is an exploded perspective view of the capacitor according to the first embodiment without a sealing resin.
FIG. 3 is a perspective view of a capacitor element according to the first embodiment.
FIG. 4 is a perspective view of a first busbar according to the first embodiment.
FIG. 5 is a perspective view of a second busbar according to the first embodiment.
FIG. 6 is a perspective view of an insulating member according to the first embodiment.
FIG. 7A is a perspective view of a case according to the first embodiment as seen from diagonally above.
FIG. 7B is a perspective view of the case according to the first embodiment as seen from a diagonally above direction different from Fig. 7A.
FIG. 8A is a perspective view of a lid according to the first embodiment as seen from diagonally above.
FIG. 8B is a perspective view of the lid according to the first embodiment as seen from diagonally below.
FIG. 9 is an explanatory illustration of a manufacturing process of the capacitor according to the first embodiment.
FIG. 10 is an explanatory illustration of the manufacturing process of the capacitor subsequent to FIG. 9.
FIG. 11 is an explanatory illustration of the manufacturing process of the capacitor subsequent to FIG. 10.
FIG. 12 is an explanatory illustration of the manufacturing process of the capacitor subsequent to FIG. 11.
FIG. 13 is a perspective view of a capacitor according to a second embodiment.
FIG. 14A is a perspective view of a lid according to the second embodiment as seen from diagonally above.
FIG. 14B is a perspective view of the lid according to the second embodiment as seen from diagonally below.
FIG. 15A is a perspective view of a lid of a capacitor according to a third embodiment as seen from diagonally above.
FIG. 15B is a perspective view of the lid according to the third embodiment as seen from diagonally below.
FIG. 16A is a schematic explanatory illustration of a variation of a case and a lid.
FIG. 16B is a schematic explanatory illustration of another variation of a case and a lid.
FIG. 16C is a schematic explanatory illustration of still another variation of a case and a lid.
FIG. 17A is a schematic explanatory illustration of a variation of a top plate part of a lid.
FIG. 17B is a schematic explanatory illustration of another variation of a top plate part of a lid.

### DETAILED DESCRIPTION

### First Embodiment

In the following, a capacitor 1 according to a first embodiment will be described in detail referring to the accompanying drawings.

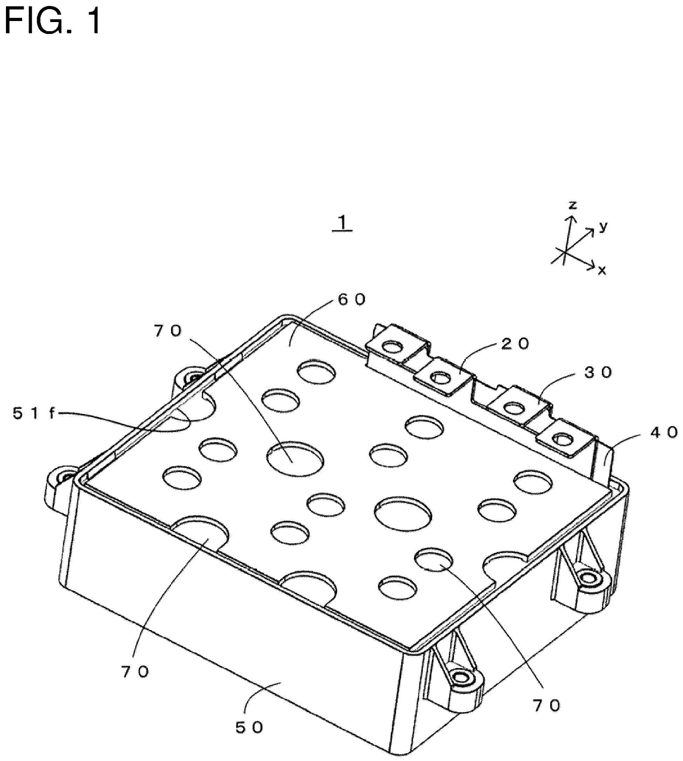

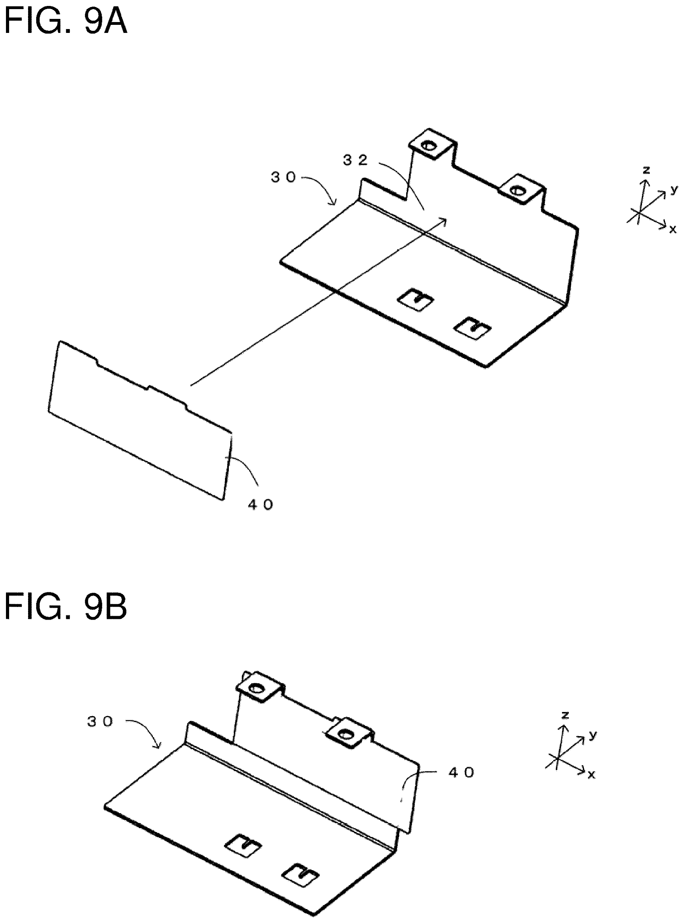

The structure of the capacitor 1 according to the first embodiment will be described referring to FIGS. 1 to 8. In the drawings from FIG. 1 to FIG. 8 and the drawings from FIG. 9 to FIG. 12, x-, y-, and z-axes respectively indicate the same directions. The opening side of a case 50 in the completed capacitor l corresponds to the xy plane. The short-side lateral surfaces of the case 50 correspond to the yz plane. The long-side lateral surfaces of the case 50 correspond to the zx plane. In this manner, the capacitor 1 and its components (a capacitor element 10, a first busbar 20, a second busbar 30, an insulating member 40, a case 50, a lid 60, and a sealing resin 70) are illustrated.

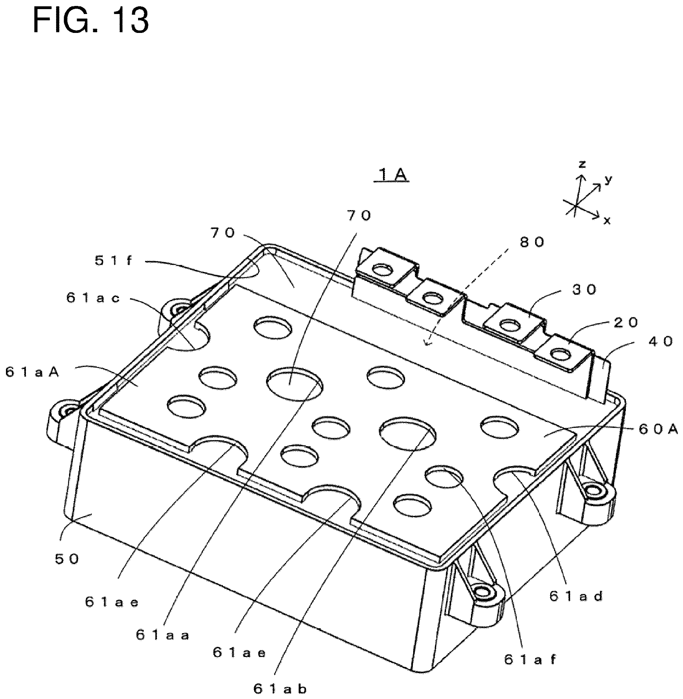

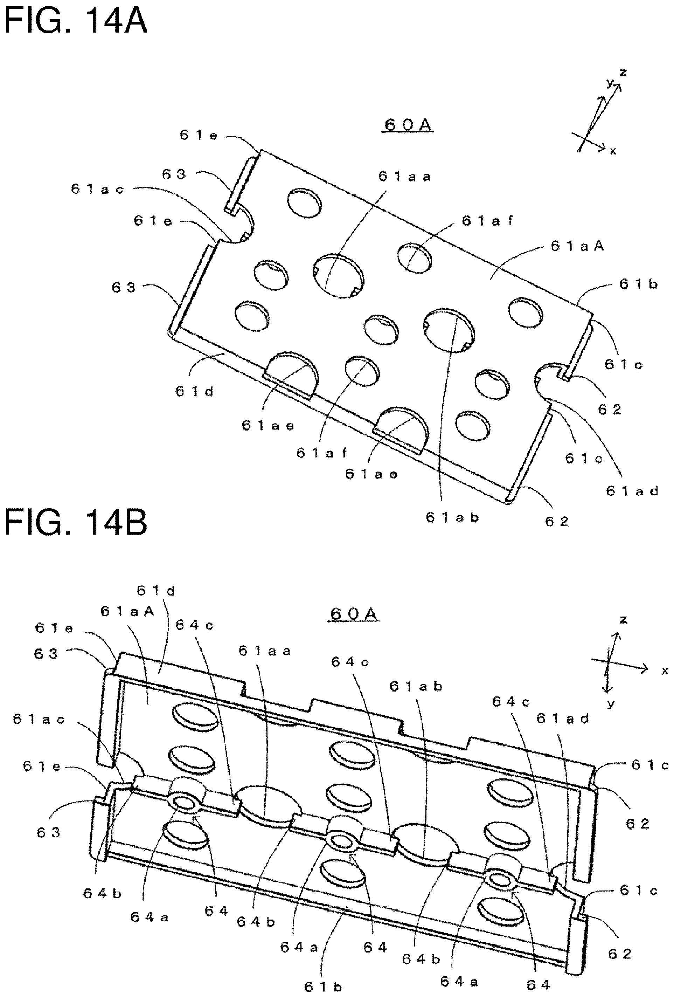

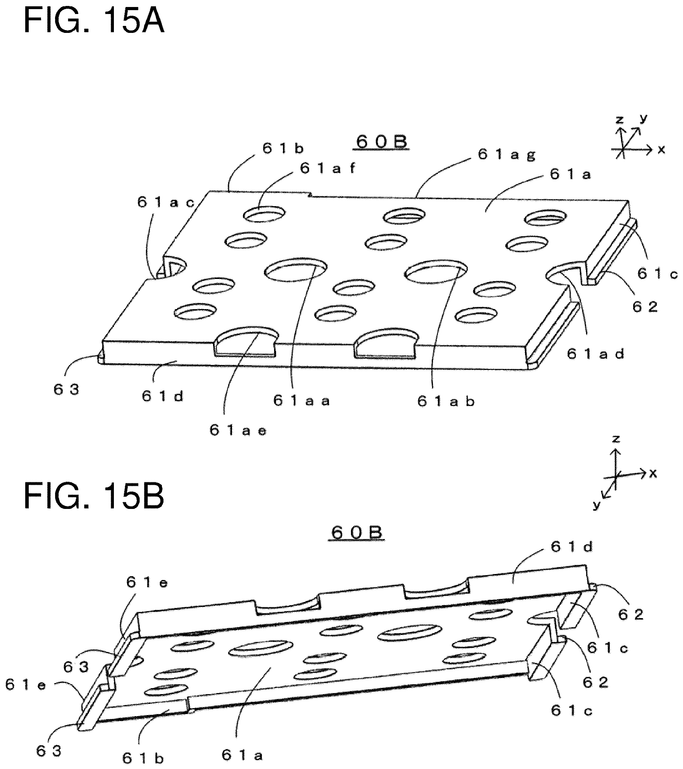

The same applies to x-, y-, and z-axes in FIGS. 13 and 14 referred to in a second embodiment and FIG. 15 referred to in a third embodiment.

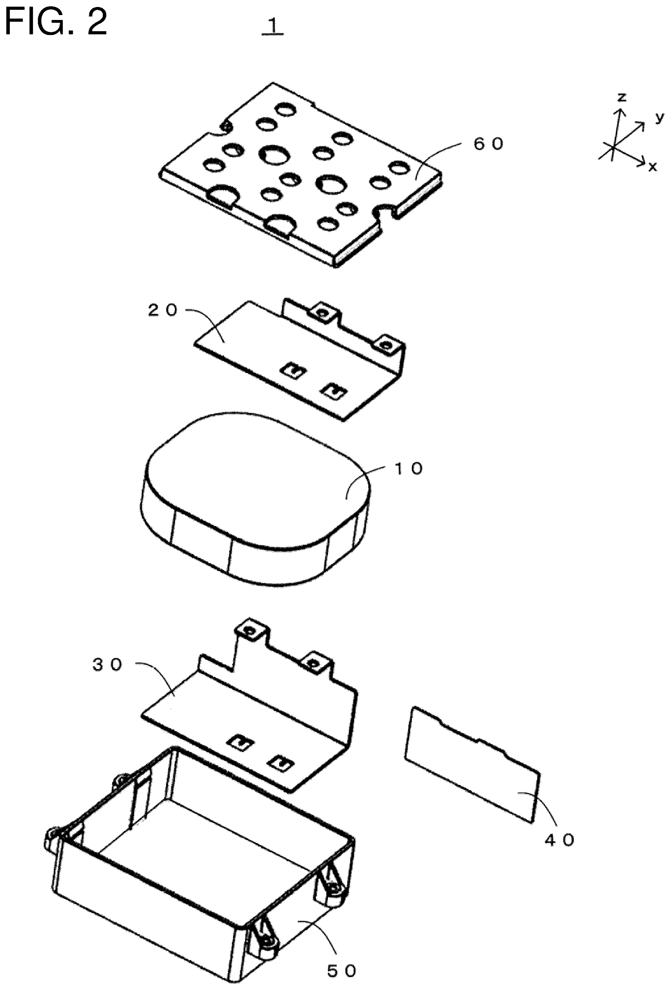

As shown in FIGS. 1 and 2, the capacitor 1 has a metallized film capacitor element (capacitor element), the first busbar 20, the second busbar 30, the insulating member 40 such as an insulating paper or insulating plate, the case 50, the lid 60, and the sealing resin 70.

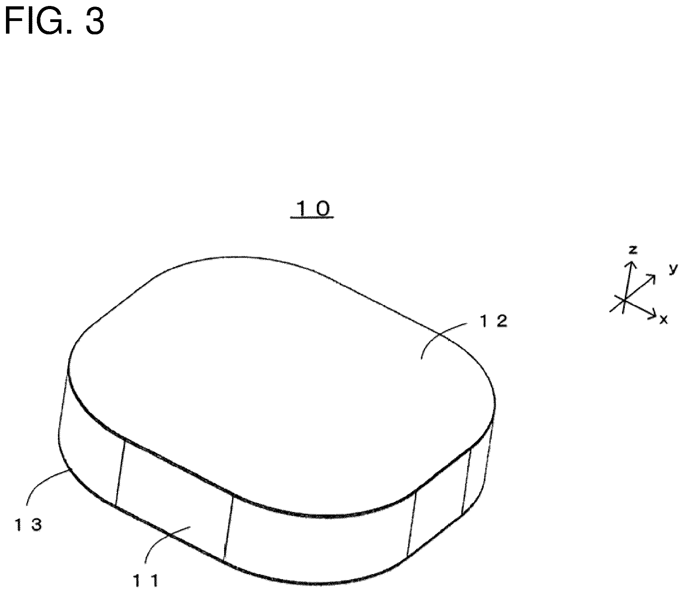

As shown in FIG. 3, the capacitor element 10 has an element body 11, a first terminal electrode 12, and a second terminal electrode 13. The first terminal electrode 12 is formed at a first end surface of the element body 11 by spraying metal such as zinc. The second terminal electrode 13 is formed at a second end surface of the element body 11 by spraying metal such as zinc.

The element body 11 is formed by: superposing two metallized films, each of which is a dielectric film having aluminum deposited thereon; wrapping or stacking the superposed metallized films; and pressing the films to be flat.

Note that, the element body 11 according to the present embodiment is not limited to the above. It may be made of: metallized films having another metal such as zinc or magnesium deposited thereon; metallized films having a plurality of types of such metals deposited thereon; or metallized film having alloy of such metals deposited thereon.

By soldering the first busbar 20 to the first terminal electrode 12 while in contact with each other, the first terminal electrode 12 and the first busbar 20 are electrically connected. By soldering the second busbar 30 to the second terminal electrode 13 while in contact with each other, the second terminal electrode 13 and the second busbar 30 are electrically connected. The first busbar 20 and the second busbar 30 are made of a conductive material such as copper. In the present embodiment, the first terminal electrode 12 and the first busbar 20 are on the P-electrode side, and the second terminal electrode 13 and the second busbar 30 are on the N-electrode side. Note that, the first terminal electrode 12 and the first busbar 20 may be on the N-electrode side, and the second terminal electrode 13 and the second busbar 30 may be on the P-electrode side.

While the capacitor 1 according to the present embodiment has a single capacitor element 10, the present invention is not limited thereto. The capacitor 1 may have two or more capacitor elements 10.

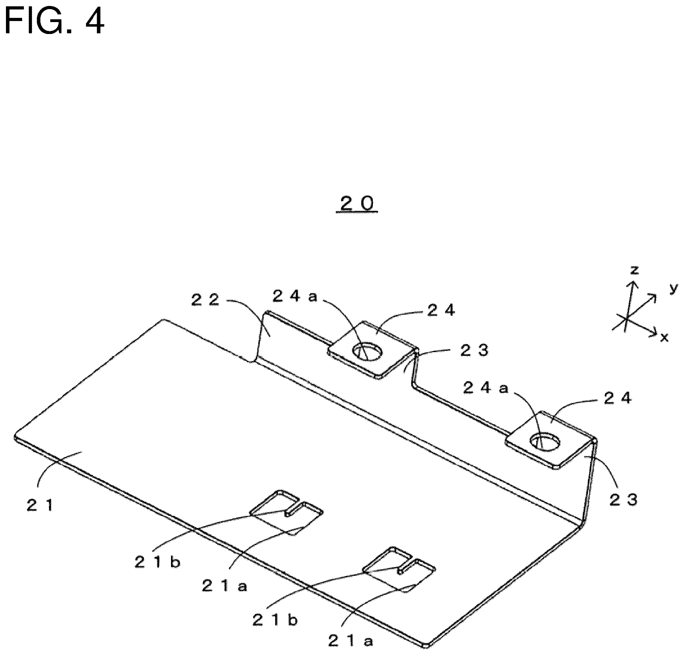

The first busbar 20 is made of a conductive material such as copper and has the shape shown in FIG. 4.

The first busbar 20 has a flat plate-like terminal electrode contact part 21. The terminal electrode contact part 21 is in contact with the first terminal electrode 12 in the assembled capacitor 1. The terminal electrode contact part 21 has a substantially quadrangular outer shape in an xy plan view. The terminal electrode contact part 21 has two through parts 21a. Each through part 21a is quadrangular in an xy plan view. Each through part 21a has a projecting part 21b used in soldering the first busbar 20 to the first terminal electrode 12.

The first busbar 20 has a flat plate-like first lead part 22. The first lead part 22 extends in the perpendicular direction (the z-axis positive direction) relative to the surface of the terminal electrode contact part 21 from one side of the terminal electrode contact part 21 (the side on the y-axis positive side of the terminal electrode contact part 21).

The first busbar 20 has two second lead parts 23. Each second lead part 23 extends in the z-axis positive direction from an end of the first lead part 22, which is on the opposite side to the terminal electrode contact part 21.

The first busbar 20 has two external connection terminal parts 24. Each external connection terminal part 24 extends parallel to the terminal electrode contact part 21 (in the y-axis negative direction) and opposes to the terminal electrode contact part 21 from an end of the second lead part 23, which is on the opposite side to the first lead part 22. Each external connection terminal part 24 has a through part 24a. The through parts 24a are substantially circular in an xy plan view. By the through parts 24a, the first busbar 20 and external wiring are fastened to each other.

The first busbar 20 may be fabricated as follows. A piece of flat plate having portions corresponding to the terminal electrode contact part 21, the first lead part 22, the two second lead parts 23, and the two external connection terminal parts 24 is processed using a mold, and then is subjected to bending work.

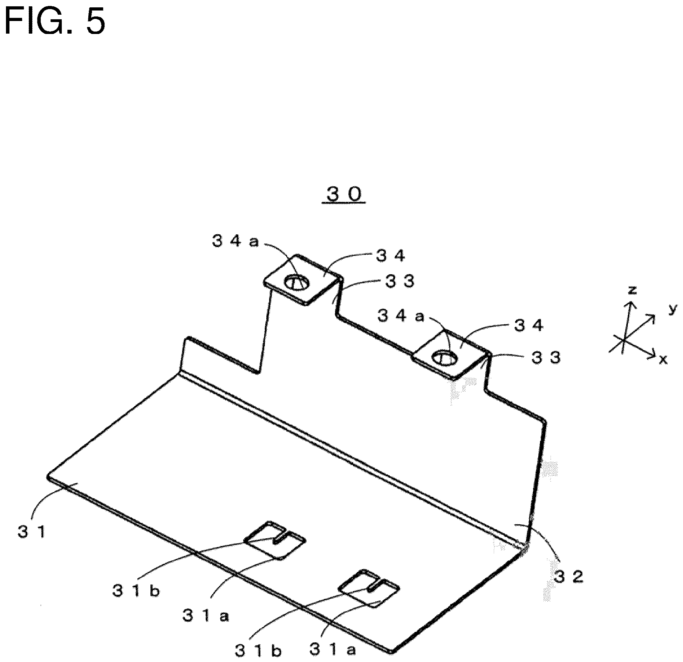

The second busbar 30 is made of a conductive material such as copper and has the shape shown in FIG. 5.

The second busbar 30 has a flat plate-like terminal electrode contact part 31. The terminal electrode contact part 31 is in contact with the second terminal electrode 13 in the assembled capacitor 1. The terminal electrode contact part 31 has a substantially quadrangular outer shape in an xy plan view. The terminal electrode contact part 31 has through parts 31a. Each through part 31a is quadrangular in an xy plan view. The through part 31a has a projecting part 31b used in soldering the second busbar 30 to the second terminal electrode 13.

The second busbar 30 has a flat plate-like first lead part 32. The first lead part 32 extends in the perpendicular direction (the z-axis positive direction) relative to the surface of the terminal electrode contact part 31 from one side of the terminal electrode contact part 31 (the side on the y-axis positive side of the terminal electrode contact part 31).

In the assembled capacitor 1, the first lead part 22 of the first busbar 20 and the first lead part 32 of the second busbar 30 partially overlap in a zx plan view. The first lead part 22 is positioned closer to the capacitor element 10 side than the first lead part 32. The insulating member 40 is disposed between the first lead part 22 and the first lead part 32. This reliably insulates between the first busbar 20 and the second busbar 30. The insulating member 40 may not be disposed between the first lead part 22 and the first lead part 32 if the first busbar 20 and the second busbar 30 could be reliably insulated from each other.

The second busbar 30 has two second lead parts 33. Each second lead part 33 extends in the z-axis positive direction from an end of the first lead part 32, which is on the opposite side to the terminal electrode contact part 31.

The second busbar 30 has two external connection terminal parts 34. Each external connection terminal part 34 extends parallel to the terminal electrode contact part 31 (in the y-axis negative direction) and opposes to the terminal electrode contact part 31 from an end of the second lead part 33, which is on the opposite side to the first lead part 32. Each external connection terminal part 34 has a through part 34a. The through parts 34a are substantially circular in an xy plan view. By the through parts 34a, the second busbar 30 and an external wiring are fastened to each other.

The second busbar 30 may be fabricated as follows. A piece of flat plate having portions corresponding to the terminal electrode contact part 31, the first lead part 32, the two second lead parts 33, and the two external connection terminal parts 34 is processed using a mold, and then is subjected to bending work.

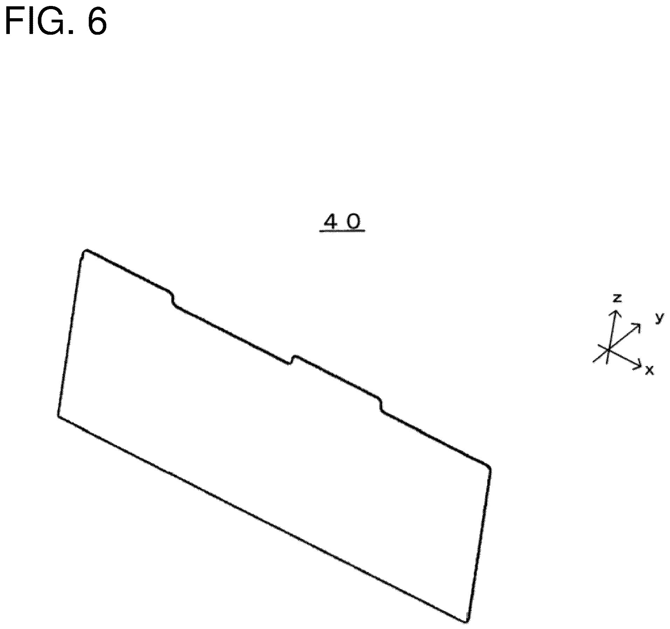

The insulating member 40 is made of an insulating material. As shown in FIG. 6, the insulating member 40 has a substantially quadrangular outer shape in a zx plan view. The insulating member 40 is disposed between the first lead part 22 of the first busbar 20 and the first lead part 32 of the second busbar 30 to insulate between the first busbar 20 and the second busbar 30.

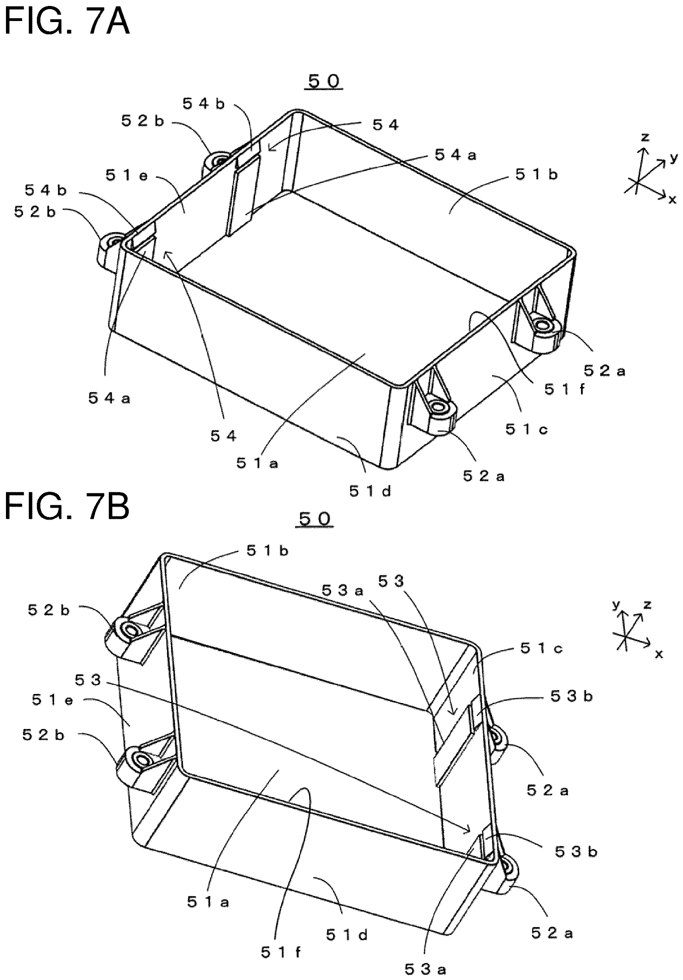

The case 50 may be made of any of a variety of materials, including organic materials such as resin such as polyphenylene sulfide (PPS) and polybutylene terephthalate (PBT) or plastics, and inorganic materials such as ceramics. The case 50 has the shape shown in FIGS. 7A and 7B.

The case 50 has a flat plate-like bottom part 51a. The bottom part 51a has a substantially quadrangular outer shape in an xy plan view. The case 50 has a first lateral part 51b, a second lateral part 51c, a third lateral part 51d, and a fourth lateral part 51e. The first to fourth lateral parts 51b to 51e are each flat-plate like, extending from the four sides of the bottom part 51a in the perpendicular direction (z-axis positive direction) relative to the inner side (inner bottom surface) of the bottom part 51a. The case 50 has the box-like shape of a rectangular cuboid with an open part 51f, which corresponds to the plane opposed to the inner bottom surface of the bottom part 51a.

The case 50 has two first mount parts 52a and two second mount parts 52b. The two first mount parts 52a are disposed on the outer surface of the second lateral part 51c. The two second mount parts 52b are disposed on the outer surface of the fourth lateral part 51e. The first mount parts 52a and the second mount parts 52b each have a through part. By the first mount parts 52a and the second mount parts 52b, the capacitor 1 is mounted on an external apparatus.

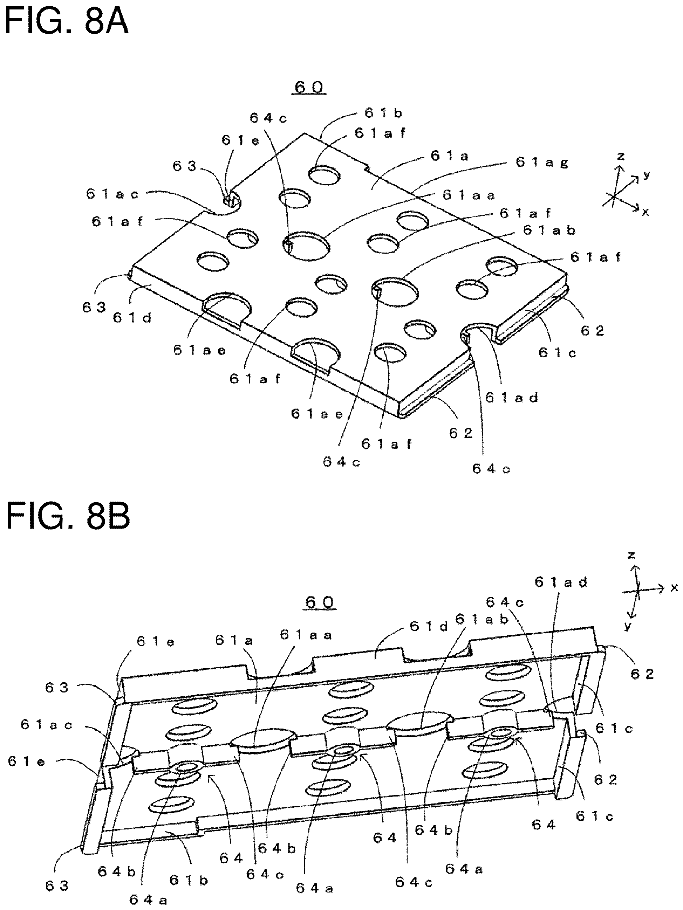

The case 50 has two first fitted parts 53 on the inner surface of the second lateral part 51c. Each first fitted part 53 has a first lower fitted part 53a and a first upper fitted part 53b on the inner surface of the second lateral part 51c. The first lower fitted part 53a and the first upper fitted part 53b are spaced apart from each other. In a yz plan view, the upper and lower surfaces of the first lower fitted part 53a are parallel to the inner bottom surface of the bottom part 51a. A first fitting part 62 (see FIG. 8) of the lid 60 fits into the space between the upper surface of the first lower fitted part 53a and the lower surface of the lower surface of the first upper fitted part 53b.

The case 50 has two second fitted parts 54 on the inner surface of the fourth lateral part 51e. Each second fitted part 54 has a second lower fitted part 54a and a second upper fitted part 54b on the inner surface of the fourth lateral part 51e. The second lower fitted part 54a and the second upper fitted part 54b are spaced apart from each other. In a yz plan view, the upper and lower surfaces of the second lower fitted part 54a are parallel to the inner bottom surface of the bottom part 51a. A second fitting part 63 (see FIG. 8) of the lid 60 fits into the space between the upper surface of the second lower fitted part 54a and the lower surface of the second upper fitted part 54b.

Referring to the inner bottom surface of the bottom part 51a as the height reference surface, the height of the upper surfaces of the two first lower fitted parts 53a and the height of the upper surfaces of the two second lower fitted parts 54a are equal. The height of the lower surfaces of the two first upper fitted part 53b and the height of the lower surfaces of the two second upper fitted parts 54b are equal.

The case 50 integrally includes, for example, the bottom part 51a, the first to fourth lateral parts 51b to 51e, the two first mount parts 52a, the two second mount parts 52b, the two first fitted parts 53, and the two second fitted parts 54.

The lid 60 may be made of any of a variety of materials, including organic materials such as resin such as polyphenylene sulfide (PPS) and polybutylene terephthalate (PBT) or plastics, inorganic materials such as ceramics, and metals such as aluminum. The lid 60 has the shape shown in FIGS. 8A and 8B.

The lid 60 has a flat plate-like top plate part 61a. The top plate part 61a has a substantially quadrangular outer shape in an xy plan view. The lid 60 has a first lateral part 61b, bisected second lateral parts 61c, a third lateral part 61d, and bisected fourth lateral parts 61e. The first to fourth lateral parts 61b to 61e are each flat-plate like, extending from the four sides of the top plate part 61a in the perpendicular direction (z-axis negative direction) relative to the inner surface (the surface on the z-axis negative side) of the top plate part 61a. The top surface of the top plate part 61a (the outer surface of the lid) is a substantially flat surface.

The top plate part 61a has two larger-diameter through parts 61aa, 61ab, four through parts 61ac, 61ad, 61ae, and twelve smaller-diameter through parts 61af, and a cutout part 61ag. The larger-diameter through parts 61aa, 61ab are each circular in an xy plan view. The through parts 61ac, 61ad, 61ae are each semicircular in an xy plan view. The smaller-diameter through parts 61af are each circular in an xy plan view. The cutout part 61ag is quadrangular in an xy plan view.

The through parts 61aa to 61ae are primarily used to pour the sealing resin 70. The through parts 61af are primarily used to expel bubbles formed during the pouring of the sealing resin 70 to the outside of the resin. The through parts 61aa, 61ab and the through parts 61ac to 61ae are larger in diameter than the through parts 61af. In the assembled capacitor 1, the cutout part 61ag allows the first lead part 22 of the first busbar 20, the first lead part 32 of the second busbar 30, and the insulating member 40 to be drawn from the inside to the outside of the capacitor 1 (see FIG. 1). The number of the through parts for pouring the sealing resin 70 may not be 6. The number of the through parts for expelling the bubbles may not be 12.

The lid 60 has two first fitting parts 62. Each first fitting part 62 extends parallel to the top plate part 61a (in the x-axis positive direction) from the end of corresponding one of the bisected second lateral parts 61c, which is on the opposite side to the top plate part 61a. The thickness of each first fitting part 62 (the thickness in the z-axis direction) is substantially equal to the gap between the upper surface of the first lower fitted part 53a and the lower surface of the first upper fitted part 53b (the direction in the z-axis direction) of the case 50. Each first fitting part 62 fits into the space between the upper surface of the first lower fitted part 53a and the lower surface of the first upper fitted part 53b.

The lid 60 has two second fitting parts 63. The second fitting parts 63 extends parallel to the top plate part 61a (in the x-axis negative direction) from ends of the bisected fourth lateral parts 61e, which are on the opposite side to the top plate part 61a. The thickness of each second fitting part 63 (the thickness in the z-axis direction) is substantially equal to the gap between the upper surface of the second lower fitted part 54a and the lower surface of the second upper fitted part 54b (the distance in the z-axis direction) of the case 50. Each second fitting part 63 fits into the space between the upper surface of the second lower fitted part 54a and the lower surface of the second upper fitted part 54b.

The lid 60 has three extending parts 64. Each extending part 64 extends downward (in the z-axis negative direction) from the lower surface of the top plate part 61a. The extending parts 64 have the same shape.

A first extending part 64 (on the left side in FIG. 8B) has a basal part 64a, a first lower-limit index part 64b, and a second lower-limit index part 64c. The basal part 64a extends in the perpendicular direction (the z-axis negative direction) relative to the lower surface of the top plate part 61a from the lower surface of the top plate part 61a between the through part 61ac and the through part 61aa. The first lower-limit index part 64b extends to partially enter the through part 61ac in an xy plan view from the lower part of the lateral surface of the basal part 64a. The second lower-limit index part 64c extends to partially enter the through part 61aa in an xy plan view from the lower part of the lateral surface of the basal part 64a.

A second extending part 64 (at the center in FIG. 8B) has a basal part 64a, a first lower-limit index part 64b, and a second lower-limit index part 64c. The basal part 64a extends in the perpendicular direction (the z-axis negative direction) relative to the lower surface of the top plate part 61a from the lower surface of the top plate part 61a between the through part 61aa and the through part 61ab. The first lower-limit index part 64b extends to partially enter the through part 61aa in an xy plan view from the lower part of the lateral surface of the basal part 64a. The second lower-limit index part 64c extends to partially enter the through part 61ab in an xy plan view from the lower part of the lateral surface of the basal part 64a.

A third extending part 64 (on the right side in FIG. 8B) has a basal part 64a, a first lower-limit index part 64b, and a second lower-limit index part 64c. The basal part 64a extends in the perpendicular direction (z-axis negative direction) relative to the lower surface of the top plate part 61a from the lower surface of the top plate part 61a between the through part 61ab and the through part 61ad. The first lower-limit index part 64b extends to partially enter the through part 61ab in an xy plan view from the lower part of the lateral surface of the basal part 64a. The second lower-limit index part 64c extends to partially enter the through part 61ad in an xy plan view from the lower part of the lateral surface of the basal part 64a.

The upper surface (the surface on the z-axis positive side) of each first lower-limit index part 64b and the upper surface (the surface on the z-axis positive side) of each second lower-limit index part 64c are positioned below (in the z-axis negative direction) the lower surface of the top plate part 61a.

The upper surfaces of the first lower-limit index part 64b and the second lower-limit index part 64c of each extending part 64 serve as the index of the poured amount lower-limit of the sealing resin 70. In the first extending part 64, the first lower-limit index part 64b is visible through the through part 61ac. The second lower-limit index part 64c is visible through the through part 61aa.

In the second extending part 64, the first lower-limit index part 64b is visible through the through part 61aa. The second lower-limit index part 64c is visible through the through part 61ab.

In the third extending part 64, the first lower-limit index part 64b is visible through the through part 61ab. The second lower-limit index part 64c is visible through the through part 61ad.

Since the upper surfaces of the first lower-limit index part 64b and the second lower-limit index part 64c of each extending part 64 serve as the index of the poured amount lower-limit of the sealing resin 70, the extending part 64 is buried in the sealing resin after the sealing resin 70 is poured and cured. Even when the lid 60 (the lower surface of the top plate part 61a) and the resin surface of the sealing resin 70 are spaced apart from each other, the extending parts 64 have at least their tips buried in the sealing resin 70. This makes it possible to dissipate heat from the sealing resin 70 via the extending parts 64.

In the present embodiment, the first to fourth lateral parts 61b to 61e, the first fitting parts 62, and the second fitting parts 63 are also in contact with the sealing resin 70. This makes possible to dissipate heat from the sealing resin 70.

In the present embodiment, the top surface of the top plate part 61a is used as the index of the poured amount upper-limit of the sealing resin 70.

The lid 60 has a shape and dimension that close the open part 51f of the case 50 substantially entirely.

The lid 60 integrally includes, for example, the top plate part 61a, the first to fourth lateral parts 61b to 61e, the two first fitting parts 62, the two second fitting parts 63, and the three extending parts 64.

The sealing resin 70 seals the capacitor element 10, part of the first busbar 20, part of the second busbar 30, and part of the insulating member 40. The sealing resin 70 is, for example, epoxy resin. However, the sealing resin 70 is not limited to epoxy resin and may be any of a variety of insulating materials used as sealing resin for electronic components. The sealing resin 70 is poured into the case 50 in a liquid state, and then formed by curing.

With reference to FIGS. 9 to 12, the manufacturing process of the capacitor 1 will be described in the following. The following manufacturing process of the capacitor 1 is only an example. Any assembly order is accepted as long as it is capable of finally assembling the capacitor 1 as shown in FIG. 1.

As shown in FIG. 9A, the insulating member 40 is bonded to the surface on the y-axis negative side of the first lead part 32 of the second busbar 30. This establishes the state shown in FIG. 9B.

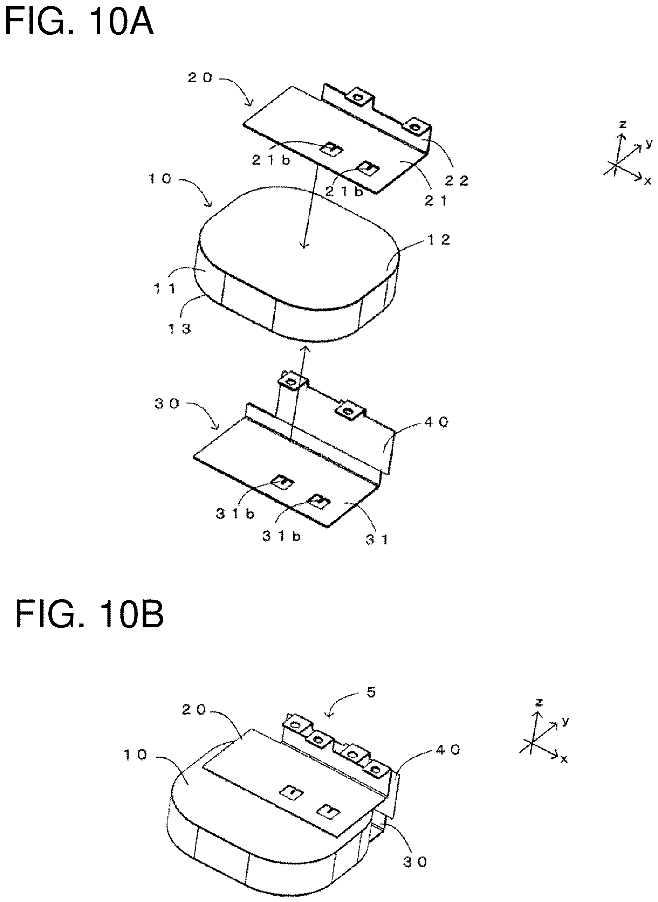

As shown in FIG. 10A, the second busbar 30 with the bonded insulating member 40 is disposed to bring the upper surface of the terminal electrode contact part 31 (the surface on the z-axis positive side) into contact with the second terminal electrode 13 of the capacitor element 10. The first busbar 20 is disposed to bring the lower surface of the terminal electrode contact part 21 (the surface on the z-axis negative side) into contact with the first terminal electrode 12 of the capacitor element 10. In this state, the second busbar 30 is soldered to the second terminal electrode 13 using the projecting parts 31b of the second busbar 30. This electrically connects the second busbar 30 and the second terminal electrode 13 to each other. The first busbar 20 is soldered to the first terminal electrode 12 using the projecting parts 21b of the first busbar 20. This electrically connects the first busbar 20 and the first terminal electrode 12 to each other. This establishes the state shown in FIG. 10B. In the following, the unit made up of the capacitor element 10, the first busbar 20, the second busbar 30, and the insulating member 40 in the state as shown in FIG. 10B is referred to as a connecting unit 5 as appropriate.

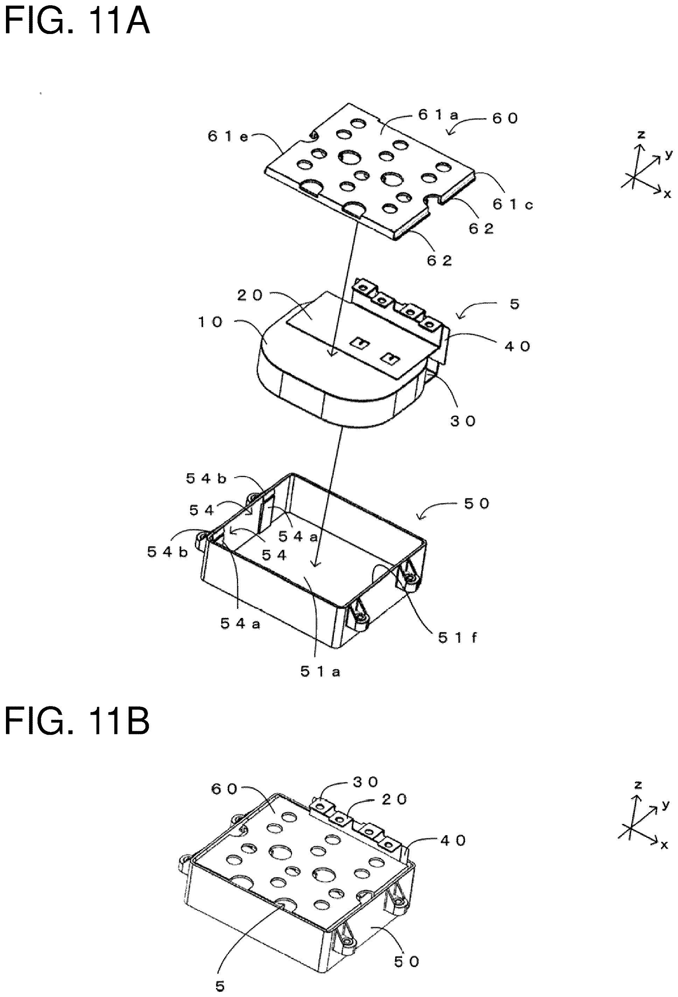

As shown in FIG. 11A, the connecting unit 5 is housed in the case 50 from the open part 51f of the case 50. Thereafter, the lid 60 is mounted on the case 50. This establishes the state shown in FIG. 11B.

In mounting the lid 60 on the case 50, for example, firstly, the lid 60 is tilted so that the fourth lateral part 61e side becomes nearer to the case 50 than the second lateral part 61c, and the second fitting parts 63 of the lid 60 (see FIG. 8) are fitted into the space between the upper surfaces of the second lower fitted parts 54a and the lower surfaces of the second upper fitted parts 54b of the case 50. Subsequently, the first fitting parts 62 of the lid 60 are fitted into the space between the upper surfaces of the first lower fitted parts 53a and the lower surfaces of the first upper fitted parts 53b of the case 50 by pushing the portion around the second lateral part 61c of the top plate part 61a of the lid 60 toward the bottom part 51a of the case 50.

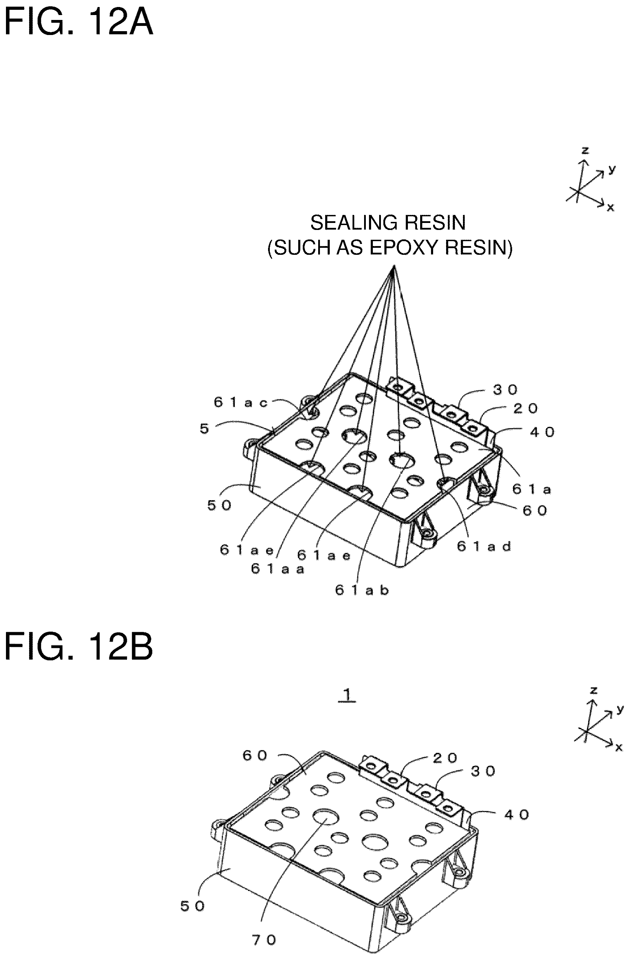

In the state where the lid 60 is mounted on the case 50 housing the connecting unit 5, as shown in FIG. 12A, the sealing resin 70, such as liquid epoxy resin, is poured from the through parts 61aa to 61ae formed at the lid 60. By allowing the resin to cure at a prescribed curing temperature, the capacitor 1 shown in FIG. 12B is completed. In the present embodiment, the sealing resin 70 is poured using the top surface of the top plate part 61a of the lid 60 as the index of the poured amount upper-limit of the sealing resin 70, and the upper surfaces of the first and second lower-limit index parts 64b, 64c (see FIG. 8) as the index of the poured amount lower-limit of the sealing resin 70.

According to the first embodiment, the poured amount of the sealing resin 70 is adjusted using the top surface of the top plate part 61a of the lid 60 as the index of the poured amount upper-limit of the sealing resin 70 and using the upper surfaces of the first and second lower-limit index parts 64b, 64c of the lid 60 as the index of the poured amount lower-limit of the sealing resin 70. This makes it possible to adjust the thickness of the sealing resin 70 covering the upper part of the capacitor element 10 and to suppress variations in the resin amount. The top surface of the top plate part 61a of the lid 60 becomes the upper surface of the capacitor 1. Since the height of the top surface of the top plate part 61a is higher in dimensional accuracy than the height of the resin surface of the sealing resin 70, this improves the dimensional accuracy of the height of the upper surface of the capacitor 1. As a result, this makes it possible to meet the required dimensional accuracy even in the case where, for example, a heat dissipation component is disposed on the upper surface of the capacitor 1.

Additionally, according to the present embodiment, bubbles that form from the time the sealing resin 70 is poured until it cures are expelled from the through parts 61aa to 61ae. This prevents the bubbles from accumulating between the resin surface of the sealing resin 70 and the lid 60, thereby preventing the sealing resin 70 from becoming thinner than intended.

Each extending part 64 has the index parts (the first lower-limit index part 64b and the second lower-limit index part 64c). Accordingly, the index of the resin surface height (upper and/or lower limit) can be arbitrarily set. In the present embodiment, the lower limit is set for the resin surface height. Providing an index part to the extending parts 64 is relatively easier than to the case, even when the capacitor has a size constraint.

The top surface of the top plate part 61a of the lid 60 is a substantially flat surface. This allows a heat dissipation component to be easily and precisely disposed on the top surface of the top plate part 61a.

The lid 60 has a shape and dimension that close the open part 51f of the case 50 substantially entirely. This makes it possible to increase the contact area between the top plate part 61a of the lid 60 and a heat dissipation component disposed on the top surface of the top plate part 61a, which contributes to improving the heat dissipation performance of the capacitor 1.

The larger diameters of the through parts 61aa to 61ae for pouring the sealing resin 70 facilitate pouring the sealing resin 70. The smaller diameters of the through parts 61af for expelling bubbles formed during the pouring of the sealing resin 70 to the outside of the resin, make it possible to increase the contact area between the top plate part 61a and a heat dissipation component. This improves the heat dissipation performance of the capacitor 1.

In the manufacturing process of the capacitor 1 according to the present embodiment, the lid 60 is mounted on the case 50, and then the sealing resin 70 is poured into the case 50. However, the sealing resin 70 may also be poured into the case 50, and then the lid 60 is mounted on the case 50. In this case, for example, the case 50 has an index part at its lateral surface. Even in the case where the sealing resin 70 is poured into the case 50 and then the lid 60 is mounted on the case 50, bubbles that form from the time the sealing resin 70 is poured until it cures are expelled from the through parts 61aa to 61ae. This prevents the bubbles from accumulating between the resin surface of the sealing resin 70 and the lid 60, thereby preventing the sealing resin 70 from becoming thinner than intended.

Here, after the sealing resin 70 is poured into the case 50, the lid 60 may be mounted on the case 50 before the sealing resin 70 completely cures. This process similarly prevents the sealing resin 70 from becoming thinner than intended.

### Second Embodiment

In the following, a capacitor 1A according to a second embodiment will be described in detail referring to FIGS. 13 and 14. The capacitor 1A is different from the capacitor 1 according to the first embodiment in having a lid 60A that is different from the lid 60. In the second embodiment, the lid 60A will be primarily described. The other constituents (the first busbar 20, the second busbar 30, the insulating member 40, and the case 50) are identical between the capacitor 1A and the capacitor 1. Accordingly, the other constituents are denoted by the same reference characters in the second embodiment and their description will not be repeated.

The lid 60A has a top plate part 61aA, first to fourth lateral parts 61b to 61e, two first fitting parts 62, two second fitting parts 63, and three extending parts 64. The top surface of the top plate part 61aA is a substantially flat surface. The top plate part 61aA has two circular through parts 61aa, 61ab, four semicircular through parts 61ac to 61ae, and nine circular through parts 61af in an xy plan view.

The through parts 61aa to 61ae are primarily used to pour the sealing resin 70. The through parts 61af are primarily used to expel bubbles formed by pouring the sealing resin 70 to the outside of the resin. The through parts 61aa, 61ab and the through parts 61ac to 61ae are larger in diameter than the through parts 61af.

While the top plate part 61a according to the first embodiment has 12 pieces of through parts 61af, the top plate part 61aA according to the present embodiment has 9 pieces of through parts 61af. While the top plate part 61a according to the first embodiment has the cutout part 61ag, the top plate part 61aA according to the present embodiment does not have a cutout part. The number of the through parts for pouring the sealing resin 70 may not be 6. The number of through parts for expelling bubbles may not be 9.

The lid 60 according to the first embodiment has a shape and dimension that close the open part 51f of the case 50 substantially entirely. On the other hand, the lid 60A according to the present embodiment has a shape and dimension that close the open part 51f of the case 50 not substantially entirely but partially. Specifically, the portion indicated by a broken arrow 80 in the open part 51f is not closed by the lid 60A.

The second embodiment attains the effects similar to those done by the first embodiment. The second embodiment enhances flexibility in designing the leads of the first busbar 20 and the second busbar 30 and the like, using the portion not closed by the lid 60A, while also suppressing variations in the amount of the sealing resin by the lid 60A.

### Third Embodiment

In the following, a capacitor according to the third embodiment will be described in detail referring to FIG. 15. The capacitor according to the third embodiment is different from the capacitor 1 according to the first embodiment in having a lid 60B that is different from the lid 60. In the third embodiment, the lid 60B will be primarily described. The other constituents (the first busbar 20, the second busbar 30, the insulating member 40, and the case 50) are identical between the capacitor according to the third embodiment and the capacitor 1 according to the first embodiment. Accordingly, the description and illustration of these other constituents will not be repeated in the third embodiment.

The lid 60B according to the present embodiment corresponds to the lid 60 according to the first embodiment without the extending parts 64. The lid 60B has a top plate part 61a, first to fourth lateral parts 61b to 61e, two first fitting parts 62, and two second fitting parts 63. The top plate part 61a has two circular through parts 61aa, 61ab, four semicircular through parts 61ac to 61ae, twelve circular through parts 61af, and a quadrangular cutout part 61ag in an xy plan view.

The through parts 61aa to 61ae are primarily used to pour the sealing resin 70. The through parts 61af are primarily used to expel bubbles formed by pouring the sealing resin 70 to the outside of the resin. The through parts 61aa, 61ab and the through parts 61ac to 61ae are larger in diameter than the through parts 61af. In the assembled capacitor 1, the cutout part 61ag allows the first lead part 22 of the first busbar 20, the first lead part 32 of the second busbar 30, and the insulating member 40 to be drawn from the inside to the outside of the capacitor. The number of the through parts for pouring the sealing resin 70 may not be 6. The number of the through parts for expelling the bubbles many not be 12.

In the lid 60B according to the present embodiment, the top surface of the top plate part 61a is used as the index of the poured amount upper-limit of the sealing resin 70, and the lower surface of the top plate part 61a is used as the index of the poured amount lower-limit of the sealing resin 70. In order to use the lid 60B as the index of poured amount upper- and lower-limit of the sealing resin 70, for example, the thickness of the lid 60B is adjusted.

In the lid 60B according to the third embodiment, the poured amount of the sealing resin 70 is adjusted using the top surface of the top plate part 61a as the index of the poured amount upper-limit of the sealing resin 70 and using the lower surface of the top plate part 61a as the index of the poured amount lower-limit of the sealing resin 70. This makes it possible to adjust the thickness of the sealing resin 70 covering the upper part of the capacitor element 10 and to suppress variations in the resin amount. Furthermore, the third embodiment attains the effects similar to those done by the first embodiment.

In using the lower surface of the top plate part 61a as the index of the poured amount lower-limit of the sealing resin 70, preferably, the resin surface of the sealing resin 70 is in contact with the lower surface of the top plate part 61a in view of heat dissipation. However, the contact between the lower surface of the top plate part 61a and the sealing resin 70 is not essential. For example, the lid 60B (through parts) can also serve as the index part when the resin surface of the sealing resin 70 reaching near the lower surface of the top plate part 61a, which is visible through the through parts of the lid 60B.

Various design modifications can be made to the configurations described above.

In the first to third embodiments, the lid 60, 60A, 60B is received on the inner side of the fourth lateral parts 51b to 51e of the case 50. However, the present invention is not limited thereto. For example, the case may be received on the inner side of the first to fourth lateral parts of the lid. In this case, for example, the outer surface of the second lateral part of the case has a first fitted part and the outer surface of the fourth lateral part of the case has a second fitted part. The lid has a first fitting part that extends parallel to the top plate part from the lower end of the second lateral part and a second fitting part that extends parallel to the top plate part from the lower end of the fourth lateral part.

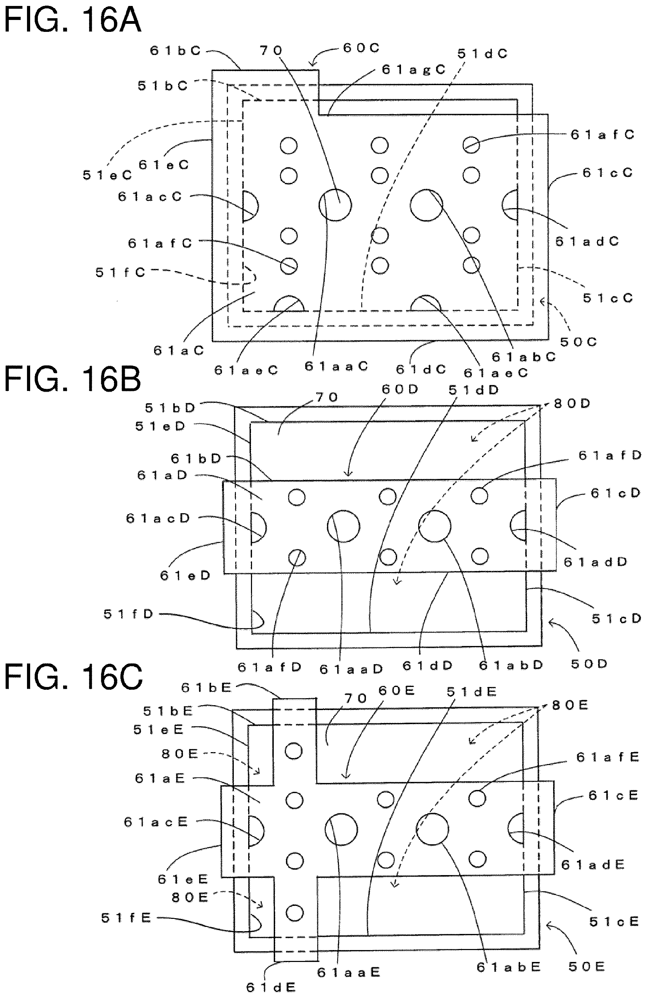

In the first to third embodiments, the lid 60, 60A, 60B is received on the inner side of the first to fourth lateral parts 51b to 51e of the case 50. However, the present invention is not limited thereto. For example, it may be configured as shown in FIGS. 16A to 16C. FIGS. 16A to 16C are schematic top views of the capacitor. For the sake of brevity, the first busbar 20, the second busbar 30, the insulating member 40 and the like are not illustrated.

A top plate part 61aC of a lid 60C of a variation shown in FIG. 16A has through parts 61aaC to 61aeC for pouring resin, through parts 61afC for expelling bubbles, and a cutout part 61agC for drawing the first busbar 20, the second busbar 30, and the insulating member 40 to the outside of the capacitor 1. The lid 60C has the outer shape that closes an open part 51fC of a case 50C substantially entirely. First to fourth lateral parts 51bC to 51eC of the case 50C are received on the inner side of first to fourth lateral parts 61bC to 61eC of the lid 60C. In this case, for example, the outer surface of the second lateral part 51cC of the case 50C has a first fitted part, and the second lateral part 61cC of the lid 60C has a first fitting part that extends parallel to the top plate part 61aC from the lower end. The first fitting part fits into the first fitted part. The outer surface of the fourth lateral part 51eC of the case 50C has a second fitted part, and the fourth lateral part 61eC of the lid 60C has a second fitting part that extends parallel to the top plate part 61aC from the lower end. The second fitting part fits into the second fitted part.

A top plate part 61aD of a lid 60D of a variation shown in FIG. 16B has through parts 61aaD to 61adD for pouring resin and through parts 61afD for expelling bubbles. The lid 60D is rectangular in a plan view. The lid 60D closes an open part 51fD of a case 50D not substantially entirely but partially. That is, the portions indicated by broken-line arrows 80D in an open part 51fD are not closed by the lid 60D. Second and fourth lateral parts 51cD, 51eD of the case 50D are received on the inner side of second and fourth lateral parts 61cD, 61eD of the lid 60D. In this case, the outer surface of the second lateral part 51cD of the case 50D has a first fitted part, and the second lateral part 61cD of the lid 60D has a first fitting part that extends parallel to the top plate part 61aD from the lower end. The first fitting part fits into the first fitted part. The outer surface of the fourth lateral part 51eD of the case 50D has a second fitted part, and the fourth lateral part 61eD of the lid 60D has a second fitting part that extends parallel to the top plate part 61aD from the lower end. The second fitting part fits into the second fitted part.

A top plate part 61aE of a lid 60E of a variation shown in FIG. 16C has through parts 61aaE to 61adE for pouring resin and through parts 61afE for expelling bubbles. The lid 60E is cross-shaped in a plan view. The lid 60E closes an open part 51fE of a case 50E not substantially entirely but partially. That is, the portions indicated by broken-line arrows 80E in the open part 51fE are not closed by the lid 60E. First to fourth lateral parts 51bE to 51eE of the case 50E are received on the inner side of first to fourth lateral parts 61bE to 61eE of the lid 60E. In this case, the outer surface of the second lateral part 51cE of the case 50E has a first fitted part, and the second lateral part 61cE of the lid 60E has a first fitting part that extends parallel to the top plate part 61aE from the lower end. The first fitting part fits into the first fitted part. The outer surface of the fourth lateral part 51eE of the case 50E has a second fitted part, and the fourth lateral part 61eE of the lid 60E has a second fitting part that extends parallel to the top plate part 61aE from the lower end. The second fitting part fits into the second fitted part. The outer surface of the first lateral part 51bE of the case 50E has a third fitted part, and the first lateral part 61bE of the lid 60E has a third fitting part that extends parallel to the top plate part 61aE from the lower end. The third fitting part fits into the third fitted part. The outer surface of the third lateral part 51dE of the case 50E has a fourth fitted part, and the third lateral part 61dE of the lid 60E has a fourth fitting part that extends parallel to the top plate part 61aE from the lower end. The fourth fitting part fits into the fourth fitted part.

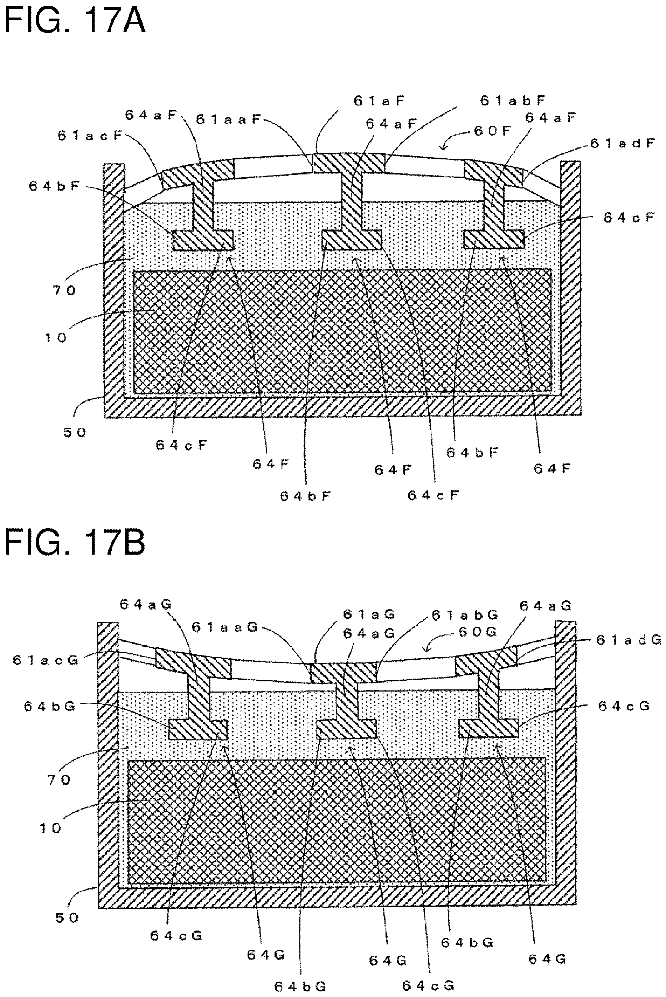

While the top plate part 61a of the lid 60, 60A, 60B according to the first to the third embodiments is flat plate-like, the present invention is not limited thereto. For example, the top plate part 61a may have the shape shown in FIGS. 17A and 17B. FIGS. 17A and 17B are schematic sectional views of the capacitor. For the sake of brevity, the first busbar 20, the second busbar 30, and the insulating member 40 and the like are not illustrated.

A top plate part 61aF of a lid 60F of a variation shown in FIG. 17A has through parts 61aaF to 61adF for pouring resin. The top plate part 61aF of the lid 60F has, at three locations on its the lower surface, extending parts 64F each having a basal part 64aF, a first lower-limit index part 64bF, and a second lower-limit index part 64cF. The height of the upper surfaces of the three first lower-limit index parts 64bF and the height of the upper surfaces of the three second lower-limit index parts 64cF are equal. The upper surfaces of the three first lower-limit index parts 64bF and the upper surfaces of the three second lower-limit index parts 64cF serve as the index of the poured amount lower-limit of the sealing resin 70. The upper surface of substantially the deepest portion of the top plate part 61aF of the lid 60F serves as the index of the poured amount upper-limit of the sealing resin 70. As shown in FIG. 17A, the top plate part 61aF of the lid 60F is curved, expanding toward the outer side of the capacitor. The tips of the extending parts 64F are buried in the sealing resin 70.

A top plate part 61aG of a lid 60G of a variation shown in FIG. 17B has through parts 61aaG to 61adG for pouring resin and others. The top plate part 61aG of the lid 60G has, at three locations on its lower surface, extending parts 64G each having a basal part 64aG, a first lower-limit index part 64bG, and a second lower-limit index part 64cG. The height of the upper surfaces of the three first lower-limit index parts 64bG and the height of the upper surfaces of the three second lower-limit index parts 64cG are equal. The upper surfaces of the three first lower-limit index parts 64bG and the upper surfaces of the three second lower-limit index parts 64cG serve as the index of the poured amount lower-limit of the sealing resin 70. The upper surface of substantially the deepest portion of the top plate part 61aG of the lid 60G serves as the index of the poured amount upper-limit of the sealing resin 70. As shown in FIG. 17B, the top plate part 61aG of the lid 60G is curved, being depressed toward the inner side of the capacitor. The tips of the extending parts 64G are buried in the sealing resin 70.

In the lid 60C to 60E according to the variations shown in FIG. 16A, the top plate part 61aC to 61aE may be curved to expand toward the outer side of the capacitor, or may be curved to be depressed toward the inner side of the capacitor.

The configurations described in the embodiments or variations may be combined as appropriate.

The present invention is widely applicable to capacitors in which a capacitor element housed in a case is sealed with a sealing resin.

### Reference Signs List

1, 1A: capacitor
10: capacitor element
20: first busbar
30: second busbar
40: insulating member
50: case
53: first fitted part
53a: first lower fitted part
53b: first upper fitted part
54: second fitted part
54a: second lower fitted part
54b: second upper fitted part
60: lid
61a: top plate part
61aa to 61 af: through part
62: first fitting part
63: second fitting part
64: index part
64b: first lower-limit index part
64c: second lower-limit index part
70: sealing resin

## Claims

1. A capacitor comprising:
a capacitor element;
a case that has an open part and houses the capacitor element;
a lid that has a through part and is disposed at the open part with the capacitor element being housed in the case; and
a sealing resin that is poured into the case to seal the capacitor element.

2. The capacitor according to claim 1, wherein an outer surface of the lid is a substantially flat surface.

3. The capacitor according to claim 1 or 2, wherein the lid has an outer shape that closes the open part substantially entirely.

4. The capacitor according to any one of claims 1 to 3, wherein
the lid has an extending part that extends downward from its inner surface, and
the extending part has at least its tip buried in the sealing resin.

5. The capacitor according to claim 4, wherein the extending part has an index part that serves as an index for a resin surface of the sealing resin.

6. The capacitor according to claim 5, wherein the index part is visible through the through part.

7. The capacitor according to any one of claims 1 to 6, wherein the sealing resin is poured into the case through the through part with the lid being disposed at the open part.

8. A manufacturing method of a capacitor, comprising:
disposing a lid having a through part at an open part of a case housing a capacitor element; and
pouring a sealing resin into the case through the through part, with the lid being disposed at the open part, to seal the capacitor element.

9. The manufacturing method of a capacitor according to claim 8, wherein an outer surface of the lid is a substantially flat surface.

10. The manufacturing method of a capacitor according to claim 8 or 9, wherein the lid has an outer shape that closes the open part substantially entirely.

11. The manufacturing method of a capacitor according to any one of claims 8 to 10, wherein
the lid has an extending part that extends downward from its inner surface, and
the extending part has at least its tip buried in the sealing resin.

12. The manufacturing method of a capacitor according to claim 11, wherein the extending part has an index part that serves as an index for a resin surface of the sealing resin.

13. The manufacturing method of a capacitor according to claim 12, wherein the index part is visible through the through part.
